# EUROPEAN PATENT SPECIFICATION

(11) **EP 4 179 270 B1**
(45) Date of publication and mention of the grant of the patent: **22.05.2024**
(21) Application number: 20740428.6
(22) Date of filing: 07.07.2020
(51) Int. Cl.: F28D 20/00, E21B 41/00, F02C 6/16, H02J 15/00, F24T 10/30, F15B 1/04

(54) **METHOD AND SYSTEM FOR STORING AND RECOVERING OFFSHORE RENEWABLE ENERGY**
VERFAHREN UND SYSTEM ZUR SPEICHERUNG UND RÜCKGEWINNUNG VON ERNEUERBARER OFFSHORE-ENERGIE
PROCÉDÉ ET SYSTÈME DE STOCKAGE ET DE RÉCUPÉRATION D'ÉNERGIE RENOUVELABLE EN MER

(43) Date of publication of application: 17.05.2023
(73) Proprietor: Fizzy Transition Ventures B.V., 9727 KB Groningen (NL)
(72) Inventor: VAN HIJFTE, Ludo Gijsbert, 9727 KB Groningen (NL); STIGTER, Haije Tjipkes, 9727 KB Groningen (NL)
(74) Representative: V.O.
(86) International application number: PCT/NL2020/050442
(87) International publication number: WO 2022/010344

(56) References cited:
- EP-A1- 2 703 610
- WO-A1-2013/000520
- US-A1- 2013 062 890
- US-A1- 2016 069 777

## Description

The invention relates to a method and a system for storing and recovering renewable energy which was generated offshore.

In the present disclosure:
- the term "renewable energy" refers to energy, including for example electrical energy, which is generated from wind, solar radiation, geothermal heat, tidal movements or other sources, which, contrary to fossil fuels, do not get depleted;
- the term "renewable energy sources" refers to systems for the generation of renewable energy; and
- the term "conventional energy sources" refers to systems for the generation of energy from fossil fuels, such as coal, petroleum or natural gas.

A problem in the generation of renewable energy is that production levels are variable.

The transportation of renewable energy requires a transportation network which has a maximum peak capacity, wherein said maximum peak capacity determines the maximum production capacity of connected (renewable) energy sources. In comparison with a transportation network for stable energy production from conventional energy sources only a portion of the capacity of a transportation network for renewable energy sources is used because normally said network for renewable energy sources transports less energy than at moments of peak production. Alternatively, the maximum peak capacity of a transportation network sometimes requires shutting down renewable energy sources, such as offshore wind farms, to avoid overloading the transportation network.

Furthermore, with increasing quantities of - and increasing dependency on - renewable energy, supply and demand will need to be more frequently realigned to ensure that energy usage matches variable energy production.

Furthermore, conventional energy sources will have to supply energy during periods of low renewable energy production, thus limiting the number of renewable energy sources that can be added to the total energy system without the need for additional conventional energy sources. An unwanted consequence of using conventional energy sources during periods of low renewable energy production is that carbon dioxide is emitted, making a completely renewable energy system impossible.

When a technique is applied wherein generated renewable energy is temporarily stored nearby the renewable energy source during periods of peak production, and said generated renewable energy is recovered during periods of low renewable energy production, opportunities arise to make more efficient use of the transportation network, reducing investment requirements for the transportation network, requiring fewer adjustments in the energy market to align supply and demand and reducing the need for unconventional energy sources for energy production during low renewable energy production periods.

Some known proposed techniques propose drilling new, complex (sometimes horizontal) wells in an offshore underground reservoir for the injection and production of carbon dioxide. Said known techniques propose making use of "thermosyphoning", wherein geothermal heat is absorbed by the injected carbon dioxide as said carbon dioxide flows from the injection well, through the reservoir rock, to the production well and wherein two or more reservoirs are required at different depths with different temperatures. Said known techniques propose drilling several wells from surface to different depths in a reservoir where they deviate to a horizontal plane and follow a circular path with a radius of several hundreds of metres. Such wells are purely theoretical and cannot be drilled in reality. If in future new drilling techniques become available for drilling said complex wells they will be very costly.

US 2013/062890 A1 discloses novel carbon dioxide-based geothermal energy generation systems, i.e., carbon plume geothermal (CPG) systems, and methods. With the novel systems and methods described therein, geothermal energy can be provided at lower temperatures and at locations other than hot, dry rock formations, without negatively impacting the surrounding area through use of large-scale hydrofracturing. Use of such a carbon dioxide-based geothermal system further provides a means for sequestering and storing excess carbon dioxide, rather than having it released to the atmosphere.

WO 2013/000520 A1 proposes a method and arrangement for injecting CO₂ into a subterranean aquifer for storage therein. In order to reduce the effects of water evaporation from brine in the aquifer when dry CO₂ is injected into the aquifer, the CO₂ is supplied mixed with a salt-lean fluid, i.e. a fluid that contains a low concentration of ions that can precipitate out as salts. The mixing may take place at the wellhead, with the CO₂ salt-lean fluids supplied via separate low-grade material pipelines. The proportion of CO₂ and salt-lean fluid in the mixture is such as to obtain a CO₂ composition that is saturated with salt-lean fluid at the site of injection into the aquifer. By injecting saturated or "wet" CO₂, less water is evaporated from the brine and the salt precipitation is greatly reduced, so keeping the pore spaces clear and providing an increased accessible pore volume for CO₂ storage.

US 2016/069777 A1 discloses a process for testing a combustor or a compressor of a gas turbine engine, where a large volume of compressed air is stored in a large reservoir of at least 10,000 m³ such as an underground storage cavern, compressed air from the storage reservoir is passed through an air turbine to drive a compressor to produce high pressure and temperature compressed air, and where the compressed air can be discharged into a combustor and burned with a fuel for testing of the combustor under simulated conditions of a real gas turbine engine.

EP 2 703 610 A1 discloses that in a method for energy storing and short-term power generation, an intermediate storage of a CCS system is used to store the working fluid of a CO₂ based Rankine process. Liquid CO₂ is stored in an underground reservoir arranged to continually receive liquid CO₂ at a first temperature from one or more CO₂ capture sites and to discharge liquid CO₂ to be transported to a final storage. The underground reservoir is kept at a pressure of 8 - 10 bar. When short-term power generation is needed, liquid CO₂ is withdrawn from the underground reservoir, pressurized to about 40 - 50 bar, evaporated with the help of a low value heat source, and expanded in an expander turbine, which is connected to a generator. The expanded CO₂ is then condensed and returned to the underground reservoir at a second temperature which is higher than the first temperature. When short-term power generation is no more needed, liquid CO₂ from the underground reservoir is circulated through a heat pump to cool the CO₂ until its temperature reaches the first temperature.

It is an object of the invention to provide a solution according to which generated offshore renewable energy can be efficiently stored and recovered at a large scale and at low cost.

For that purpose, the invention provides a method for storing and recovering renewable energy, which was generated offshore, wherein use is made of:
- a first reservoir connected to a first well and a second reservoir connected to a second well, wherein each of the first reservoir and the second reservoir is an offshore underground reservoir from which natural gas or oil was previously extracted and which has been made ready for injection and storage of CO2, and wherein said CO2 is defined as being a mixture of pure carbon dioxide and other substances, wherein the share of carbon dioxide is at least 50%, and wherein each of the first well and the second well is an opening, which has previously been drilled for the purpose of extracting natural gas or oil, and which has been made ready for injection and storage of the CO2 in the first reservoir and the second reservoir, respectively, and wherein the CO2 in the first reservoir and in the second reservoir, and wherein the CO2 in the first reservoir is kept at a lower pressure than in the second reservoir;
- a ducting structure, which is configured for displacing a portion of the CO2 from the first reservoir, successively via the first well, the ducting structure and the second well, to and into the second reservoir, and vice-versa; and
- an electrically driven compressor, a turbine and an electric generator;
- and wherein said storing of said generated renewable energy is achieved by causing a portion of the CO2 to flow, successively via the first well, a part of the ducting structure and the second well, from the first reservoir to and into the second reservoir, wherein said causing a portion of the CO2 to flow is realized by the compressor being driven by said generated renewable energy;
- and wherein said recovering of the generated renewable energy is achieved by allowing a portion of the CO2 to flow, successively via the second well, a part of the ducting structure and the first well, from the second reservoir to and into the first reservoir, wherein said portion of the CO2, during said allowing a portion of the CO2 to flow, is expanding and is driving, via the turbine, the electric generator.

As mentioned, the CO2 is defined as being a mixture of pure carbon dioxide and other substances, wherein the share of carbon dioxide is at least 50%. Said other substances in the mixture can include, for example, Ar and/or CH4 and/or CO and/or H2O and/or H2S and/or N2 and/or SO2 and/or O2 and/or other substances.

Analogously to the above-mentioned method, the invention can also be embodied in a system for storing and recovering renewable energy, which was generated offshore, wherein the system comprises:
- a first reservoir connected to a first well and a second reservoir connected to a second well, wherein each of the first reservoir and the second reservoir is an offshore underground reservoir from which natural gas or oil was previously extracted and which has been made ready for injection and storage of CO2, and wherein said CO2 is defined as being a mixture of pure carbon dioxide and other substances, wherein the share of carbon dioxide is at least 50%, and wherein each of the first well and the second well is an opening, which has previously been drilled for the purpose of extracting natural gas or oil, and which has been made ready for injection and storage of the CO2 in the first reservoir and the second reservoir, respectively, and wherein the CO2 in the first reservoir and in the second reservoir, and wherein the CO2 in the first reservoir is kept at a lower pressure than in the second reservoir;
- a ducting structure, which is configured for displacing a portion of the CO2 from the first reservoir, successively via the first well, the ducting structure and the second well, to and into the second reservoir, and vice-versa; and
- an electrically driven compressor, a turbine and an electric generator;
- and wherein said storing of said generated renewable energy is achievable by causing a portion of the CO2 to flow, successively via the first well, a part of the ducting structure and the second well, from the first reservoir to and into the second reservoir, wherein said causing a portion of the CO2 to flow is realized by the compressor being driven by said generated renewable energy;
- and wherein said recovering of the generated renewable energy is achievable by allowing a portion of the CO2 to flow, successively via the second well, a part of the ducting structure and the first well, from the second reservoir to and into the first reservoir, wherein said portion of the CO2, during said allowing a portion of the CO2 to flow, is expanding and is driving, via the turbine, the electric generator.

The method and system according to the invention have several advantageous distinguishing features as compared to the above-mentioned known proposed techniques.

Since according to the invention the first well and the second well are openings which have previously been drilled for the purpose of extracting natural gas or oil, and which have been made ready for injection and storage of CO2, no new complex wells need to be drilled according to the invention.

Furthermore the invention offers the benefit that the CO2, during storage of the generated energy via the first well, the ducting structure and the second well, is injected in the second reservoir, where the CO2 remains concentrated in the area near the second well, while the CO2, during recovery of the generated energy, via the same second well, ducting structure and first well, flows back to the first reservoir, where the CO2 remains concentrated in the area near the first well. As such there is only limited to no mixing of the CO2 with other gasses and liquids in the reservoirs allowing the CO2 to retain its beneficial properties. As a result the energy efficiency is higher than for the above-mentioned known proposed techniques which depend on connecting injection wells and production wells via the pores of tens to hundreds of metres of reservoir rock, which in turn causes more mixing of the CO2 with other gasses, such as for example methane, and/or with other liquids, such as for example salt water.

It is noted that within the scope of the invention, as set forth in the appended claims, various alternatives are possible.

In the claims, for example, the indefinite articles "a" or "an", shall not be construed as limited to 'only one', but instead are used to mean `at least one' and do not exclude a plurality. As such, expressions such as "a first reservoir", "a second reservoir", "a first well", "a second well", "a compressor", "a turbine", etcetera, can respectively mean "at least one first reservoir", "at least one second reservoir", "at least one first well", "at least one second well", "at least one compressor", "at least one turbine", etcetera. Furthermore, a single element can perform the functions of several elements recited in the claims. For example, instead of said compressor, turbine and electric generator, a reversible compressor-expander unit can be applied, which can function as a turbine-generator and, in reverse, as an electrically driven compressor. Furthermore, the functions of a single element in the claims can be performed by several elements. It should be understood, however, that other variations or modifications are possible as well.

These and similar alternatives are considered to be included in the scope of the invention as set forth in the appended claims.

Now the invention will be further elucidated with reference to the following more specific, but non-limiting examples of embodiments of the present invention. Therein, the following definitions will apply:
- "CO2 source": a location where CO2 is available in concentrated form;
- "CO2 storage location": a location where CO2 in concentrated form can be stored;
- "reservoir": a porous and permeable rock formation with an impermeable cap layer or a structural geological barrier wherein a gas or a liquid can be retained;
- "underground CO2 storage location": a CO2 storage location situated near a gas or oil field or another underground reservoir that has been made ready for the injection and storage of CO2;
- "offshore CO2 storage location": an underground CO2 storage location that is situated offshore near a gas or oil field or another underground reservoir that has been made ready for injection and storage of CO2;
- "well head": valves and measurement instruments located at the top of an oil or gas well; and
- "offshore platform": an offshore location where activities take place or have previously taken place that are aimed at extracting oil and gas;
- "pumped hydro": energy storage by pumping water to a water reservoir at a higher altitude;
- "wellhead manifold": an arrangement of piping or valves connected to the well head, designed to control, distribute and monitor fluid flow;
- "flow regulator": an instrument for regulating the flow of a gas or a liquid in a closed system;
- "working volume": the amount of CO2 available in the above-mentioned storage location for recovering or storing energy;
- "Grid" or "electricity grid": the system of electric wires/cables used to transport electricity;
- "Offshore electricity grid" or "transportation grid": the system of electric wires/cables used to transport electricity from offshore wind farms to end users, and between wind farms and other offshore installations;
- "HPS": a high-pressure storage of CO2 in an underground reservoir in which the pressure is higher than the pressure in a low-pressure storage connected thereto;
- "LPS": a low-pressure storage of CO2 in an underground reservoir in which the pressure is lower than the pressure in a high-pressure storage connected thereto;
- "offshore transformer sub-station": installation for electrical connection of wind farms and other facilities on sea;

The invention may for example be embodied in a method for large-scale storage of energy near an offshore wind farm, wherein:
- use is made of two or more existing underground reservoirs at the same or different depth(s), with the same or different temperatures, wherein said existing underground reservoirs have been made suitable for storage of CO2, and wherein the pressure in the first reservoir (HPS) is increased relative to the pressure in the second and further reservoirs (LPS's);
- use is made exclusively of existing offshore platforms and existing wells;
- the platform is being equipped with the necessary systems to recover energy from high-pressure CO2 and convert this energy into electricity;
- the platform is further being equipped with a compressor for compressing low-pressure CO2 from an LPS so that this can flow into the HPS;
- a connection is made between the systems at the offshore platform and the offshore electricity grid so that electricity can be transported to and from the platform;
and wherein the method comprises the following steps:
- compressing, at the HPS, CO2 coming from the LPS by means of a CO2-compressor that is specifically designed thereto, in such manner that the CO2 flows from the LPS via one or more existing wells to the HPS and the CO2-pressure in the HPS increases near the wells;
- wherein electricity, coming from the offshore electricity grid, is consumed, whereby electrical energy in the electricity grid is converted into potential energy in the HPS;
- ending the storing of energy by turning off the compressor and closing the wells by valves;
- on a later moment, opening one or more of the same wells along which the CO2 was flowing into the HPS during the energy storing phase, and now, via the well manifold of the HPS letting the CO2 flow to a CO2-turbine, which is specifically designed thereto;
- allowing the CO2 to expand so that the potential energy is converted into kinetic energy;
- driving, by means of the CO2-turbine, an electricity generator, whereby the kinetic energy is converted into electricity;
- allowing the CO2 to flow back from the turbine, via suitable piping and an injection well, to the LPS.

Embodiments of the invention can have the following features which, each on its own or at least partly in combination with one another, may be optional:
□ The LPS and HPS can be connected by making a connection between different wells which have been drilled from the same platform in different reservoirs or by making a connection between different reservoirs which are connected with pipelines to the same platform;
□ The system can be supplemented with new CO2 from a pipeline or ship, whereby the LPS and HPS can be actively used as CO2 storage locations in combination with their function in the energy storage system;
□ The system can optionally be applied as energy production system without energy storage function for external (renewable) energy sources by partly recovering energy from the compression and injection process. This can be done by expanding CO2 from the HPS via a turbine and generating electricity by means of a generator, whereafter the CO2 flows into an LPS;
□ The system can be applied for energy storage and energy production in varying frequencies: from a few minutes till months between storage mode and and production mode; by using a relatively small turbine and generator it is possible to produce for a longer period of time a smaller amount of energy per hour, and by using a relatively large turbine and generator it is possible to produce for a shorter period of time a large amount of energy per hour;
□ A cooling system can be added to the platform to further cool the CO2 after it leaves the turbine, in order to optimize the energy output;
□ The valves of the wells in the offshore CO2 strorage location can be opened from a distance, whereafter the CO2 can flow from the LPS, via the compressor to the HPS (in case of storing energy) or from the turbine to the LPS (in case of recovering energy).

The invention can make use of existing wells which were drilled for extracting hydrocarbons. These wells may have been drilled vertically or at any arbitrary angle and may penetrate into the reservoir at irregular distances relative to one another. The wells may be connected to a manifold ("wellhead manifold") on an offshore platform via which they can be connected with one another. The wells may be used for injecting CO2 into a reservoir (such as the HPS). The same wells can also be used for allowing the CO2 to flow from the underground reservoir to the surface. The wells may be provided with already existing valves, via which the flow of CO2 can be initiated or stopped.

The invention can also make use of one or more underground reservoirs in which CO2 can be injected and which are connected with one another, directly or via an existing pipeline. These underground reservoirs can be at an arbitrary depth and can have different temperatures. By opening and closing the above-mentioned valves on the above-mentioned wells and pipelines, CO2 can flow from one reservoir to another reservoir.

The invention can also make use of a gas compression system which on an offshore platform compresses CO2 of low pressure till a high pressure of 60 bar or higher and loads the CO2 via one or more wells into a high pressure reservoir (HPS). Said gas compression system can be provided with standard measuring and control systems for safe and efficient operation.

The invention can also make use of a dedicated turbine at an offshore platform, wherein CO2 can flow from the high pressure reservoir through said turbine so that energy can be produced which by a generator can be converted into electricity.

The invention can be applied in a method wherein one or more of said reservoirs are connected with said compressor and one or more of said wells or pipelines in order to jointly form a closed system by which energy can be stored.

The invention can also be applied in a method wherein one or more of said reservoirs can be connected with one or more of said wells or pipelines and said turbine and generator in order to jointly form a closed system by which energy can be produced in the form of electricity.

The invention can be applied in a method wherein said closed system can store and recover energy with high frequency in order to compensate daily fluctuations in energy supply to the electricity grid. In this application use is made of relatively large compressors and turbines as compared to the working volume of the HPS and LPS whereby the working volume of the HPS and LPS can be consumed within a few days.

The invention can also be applied in a method wherein said closed system can store or recover energy for periods of weeks or months by using relatively small compressors and turbines as compared to the working volume of the HPS and LPS whereby the working volume is sufficient for longer periods.

The invention can also be applied for regulating capacity, frequency and voltage of the electricity grid by increasing or decreasing the flow rate of CO2 by the above-mentioned flow regulators in the closed system. In this application, the invention can help improving the quality of the offshore electricity grid like this is done on land by conventional power plants.

In the following, the invention is yet further elucidated with reference to a non-limiting embodiment and with reference to the schematic figures in the appended drawing, in which the following is shown.

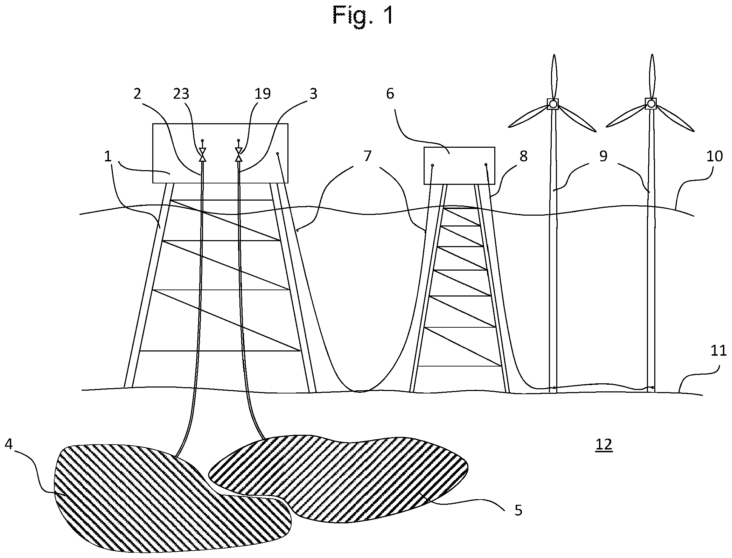

Fig. 1 shows, in horizontal side-view, an example of an embodiment of a system for carrying out methods according to the invention, wherein use is made of an offshore platform with two respective wells in two respective undergound reservoirs, and wherein the offshore platform is electrically connected with an offshore transformer sub-station and an offshore wind farm.

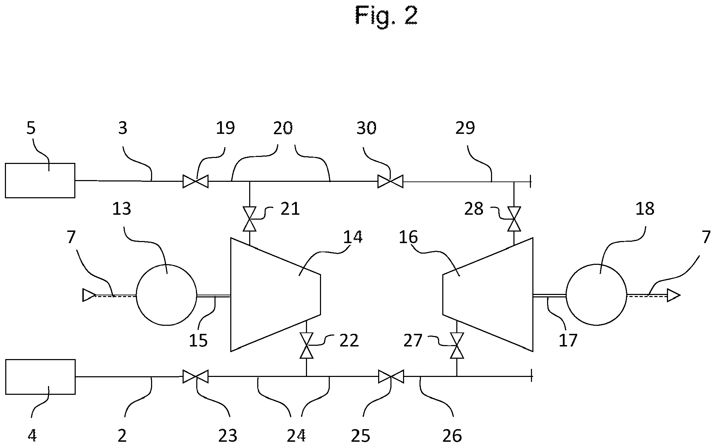

Fig. 2 shows a part of the system of Fig. 1 in more detail, in order to show how renewable energy, which was generated offshore, according to the invention can be stored by means of a compressor, and in order to show how energy, which was thus stored, according to the invention can be recovered by means of a turbine and a generator.

Fig. 1 shows an offshore platform 1 at which there is a first well 3 with valve 19, said first well 3 through the underground 12 being connected to an LPS 5, a second well 2 with valve 23, said second well 2 through the underground 12 being connected to an HPS 4, an electricity cable 7, which is connected to an offshore transformer sub-station 6, and an electricity cable 8 with which the offshore transformer sub-station 6 is connected to an offshore wind farm 9. The offshore platform 1, the offshore transformer sub-station 6 and the wind farm 9 are supported on a bottom 11 of a water body of which the water surface level is indicated by the reference numeral 10.

In Fig. 2 it is seen that renewable energy, which was generated offshore, can be stored by causing CO2 to flow from the LPS 5 by opening the valves 19, 21, 22 and 23 and by closing the valves 25 and 30, so that said CO2, successively via the first well 3, the conduit 20, the compressor 14, the conduit 24 and the second well 2, can flow to the HPS 4, wherein electricity via the electricity cable 7 is feeding an electromotor 13 which via a drive shaft 15 drives said compressor 14.

In Fig. 2 it is further seen that energy, which was thus stored, can be recovered by allowing CO2 from the HPS 4 to flow by closing the valves 21 and 22 and by opening the valves 23, 25, 27, 28, 30 and 19, so that said CO2, successively via the second well 2, the conduit 24, the conduit 26, the turbine 16, the conduit 29, the conduit 20 and the first well 3, can flow to the LPS 5, wherein said turbine 16 by means of a drive shaft 17 drives a generator 18, and wherein in generator 18 electricity is generated which via the electricity cable 7 flows to the transformer sub-station 6.

## Claims

1. A method for storing and recovering renewable energy, which was generated offshore, wherein use is made of:
• a first reservoir (5) connected to a first well (3), and a second reservoir (4) connected to a second well (2), wherein each of the first reservoir (5) and the second reservoir (4) is an offshore underground reservoir from which natural gas or oil was previously extracted and which has been made ready for injection and storage of CO2, and wherein said CO2 is defined as being a mixture of pure carbon dioxide and other substances, wherein the share of carbon dioxide is at least 50%, and wherein each of the first well (3) and the second well (2) is an opening, which has previously been drilled for the purpose of extracting natural gas or oil, and which has been made ready for injection and storage of the CO2 in the first reservoir (5) and the second reservoir (4), respectively, and wherein the CO2 is stored in the first reservoir (5) and in the second reservoir (4), and wherein the CO2 in the first reservoir (5) is kept at a lower pressure than in the second reservoir (4);
• a ducting structure (19, 20, 21, 22, 23, 24, 25, 26, 27, 28, 29, 30), which is configured for displacing a portion of the CO2 from the first reservoir (5), successively via the first well (3), the ducting structure and the second well (2), to and into the second reservoir (4), and vice-versa; and
• an electrically driven compressor (14), a turbine (16) and an electric generator (18);
and wherein said storing of said generated renewable energy is achieved by causing a portion of the CO2 to flow, successively via the first well (3), a part of the ducting structure (19, 20, 21, 22, 24 and 23) and the second well (2), from the first reservoir (5) to and into the second reservoir (4), wherein said causing a portion of the CO2 to flow is realized by the compressor (14) being driven by said generated renewable energy;
and wherein said recovering of the generated renewable energy is achieved by allowing a portion of the CO2 to flow, successively via the second well (2), a part of the ducting structure (23, 24, 25, 26, 27, 28, 29, 30, 20 and 19) and the first well (3), from the second reservoir (4) to and into the first reservoir (5), wherein said portion of the CO2, during said allowing a portion of the CO2 to flow, is expanding and is driving, via the turbine (16), the electric generator (18).

2. A system for storing and recovering renewable energy, which was generated offshore, wherein the system comprises:
• a first reservoir (5) connected to a first well (3), and a second reservoir (4) connected to a second well (2), wherein each of the first reservoir (5) and the second reservoir (4) is an offshore underground reservoir from which natural gas or oil was previously extracted and which has been made ready for injection and storage of CO2, and wherein said CO2 is defined as being a mixture of pure carbon dioxide and other substances, wherein the share of carbon dioxide is at least 50%, and wherein each of the first well (3) and the second well (2) is an opening, which has previously been drilled for the purpose of extracting natural gas or oil, and which has been made ready for injection and storage of the CO2 in the first reservoir (5) and the second reservoir (4), respectively, and wherein the CO2 is stored in the first reservoir (5) and in the second reservoir (4), and wherein the CO2 in the first reservoir (5) is kept at a lower pressure than in the second reservoir (4);
• a ducting structure (19, 20, 21, 22, 23, 24, 25, 26, 27, 28, 29, 30), which is configured for displacing a portion of the CO2 from the first reservoir (5), successively via the first well (3), the ducting structure and the second well (2), to and into the second reservoir (4), and vice-versa; and
• an electrically driven compressor (14), a turbine (16) and an electric generator (18);
and wherein said storing of said generated renewable energy is achievable by causing a portion of the CO2 to flow, successively via the first well (3), a part of the ducting structure (19, 20, 21, 22, 24 and 23) and the second well (2), from the first reservoir (5) to and into the second reservoir (4), wherein said causing a portion of the CO2 to flow is realized by the compressor (14) being driven by said generated renewable energy;
and wherein said recovering of the generated renewable energy is achievable by allowing a portion of the CO2 to flow, successively via the second well (2), a part of the ducting structure (23, 24, 25, 26, 27, 28, 29, 30, 20 and 19) and the first well (3), from the second reservoir (4) to and into the first reservoir (5), wherein said portion of the CO2, during said allowing a portion of the CO2 to flow, is expanding and is driving, via the turbine (16), the electric generator (18).

## Patentansprüche

1. Verfahren zur Speicherung und Rückgewinnung von erneuerbarer Energie, die offshore erzeugt wurde, wobei Folgendes verwendet wird:
· ein erstes Reservoir (5), das mit einem ersten Bohrloch (3) verbunden ist, und ein zweites Reservoir (4), das mit einem zweiten Bohrloch (2) verbunden ist, wobei sowohl das erste Reservoir (5) als auch das zweite Reservoir (4) ein unterirdisches Offshore-Reservoir ist, aus dem zuvor Erdgas oder Öl gefördert wurde und das für die Injektion und Speicherung von CO₂ vorbereitet wurde, und wobei das CO₂ so definiert ist, dass es ein Gemisch aus reinem Kohlendioxid und anderen Substanzen ist, wobei der Anteil an Kohlendioxid mindestens 50 % beträgt, und wobei sowohl das erste Bohrloch (3) als auch das zweite Bohrloch (2) eine Öffnung ist, die zuvor zum Zweck der Gewinnung von Erdgas oder Öl gebohrt wurde und die für die Injektion und Speicherung des CO₂ in das erste Reservoir (5) bzw. das zweite Reservoir (4) vorbereitet wurde, und wobei das CO₂ in dem ersten Reservoir (5) und in dem zweiten Reservoir (4) gespeichert wird, und wobei das CO₂ in dem ersten Reservoir (5) auf einem niedrigeren Druck als in dem zweiten Reservoir (4) gehalten wird;
· eine Rohrleitungsstruktur (19, 20, 21, 22, 23, 24, 25, 26, 27, 28, 29, 30), die so konfiguriert ist, dass sie einen Teil des CO₂ aus dem ersten Reservoir (5) nacheinander über das erste Bohrloch (3), die Rohrleitungsstruktur und das zweite Bohrloch (2) in das zweite Reservoir (4) und umgekehrt verdrängt; und
· einen elektrisch angetriebenen Kompressor (14), eine Turbine (16) und einen elektrischen Generator (18);
und wobei das Speichern der erzeugten erneuerbaren Energie dadurch erreicht wird, dass ein Teil des CO₂ veranlasst wird, nacheinander über das erste Bohrloch (3), einen Teil der Rohrleitungsstruktur (19, 20, 21, 22, 24 und 23) und das zweite Bohrloch (2) von dem ersten Reservoir (5) zu und in das zweite Reservoir (4) zu strömen, wobei das Veranlassen des Strömens eines Teils des CO₂ durch den Kompressor (14) realisiert wird, der durch die erzeugte erneuerbare Energie angetrieben wird;
und wobei die Rückgewinnung der erzeugten erneuerbaren Energie dadurch erreicht wird, dass man einen Teil des CO₂ nacheinander über das zweite Bohrloch (2), einen Teil der Rohrleitungsstruktur (23, 24, 25, 26, 27, 28, 29, 30, 20 und 19) und das erste Bohrloch (3) von dem zweiten Reservoir (4) zu und in das erste Reservoir (5) strömen lässt, wobei der Teil des CO₂ während des Strömenlassens eines Teils des CO₂ expandiert und über die Turbine (16) den elektrischen Generator (18) antreibt.

2. System zur Speicherung und Rückgewinnung von erneuerbarer Energie, die offshore erzeugt wurde, wobei das System Folgendes umfasst:
· ein erstes Reservoir (5), das mit einem ersten Bohrloch (3) verbunden ist, und ein zweites Reservoir (4), das mit einem zweiten Bohrloch (2) verbunden ist, wobei sowohl das erste Reservoir (5) als auch das zweite Reservoir (4) ein unterirdisches Offshore-Reservoir ist, aus dem zuvor Erdgas oder Öl gefördert wurde und das für die Injektion und Speicherung von CO₂ vorbereitet wurde, und wobei das CO₂ so definiert ist, dass es ein Gemisch aus reinem Kohlendioxid und anderen Substanzen ist, wobei der Anteil an Kohlendioxid mindestens 50 % beträgt, und wobei sowohl das erste Bohrloch (3) als auch das zweite Bohrloch (2) eine Öffnung ist, die zuvor zum Zweck der Gewinnung von Erdgas oder Öl gebohrt wurde und die für die Injektion und Speicherung des CO₂ in das erste Reservoir (5) bzw. das zweite Reservoir (4) vorbereitet wurde, und wobei das CO₂ in dem ersten Reservoir (5) und in dem zweiten Reservoir (4) gespeichert wird, und wobei das CO₂ in dem ersten Reservoir (5) auf einem niedrigeren Druck als in dem zweiten Reservoir (4) gehalten wird;
· eine Rohrleitungsstruktur (19, 20, 21, 22, 23, 24, 25, 26, 27, 28, 29, 30), die so konfiguriert ist, dass sie einen Teil des CO₂ aus dem ersten Reservoir (5) nacheinander über das erste Bohrloch (3), die Rohrleitungsstruktur und das zweite Bohrloch (2) in das zweite Reservoir (4) und umgekehrt verdrängt; und
· einen elektrisch angetriebenen Kompressor (14), eine Turbine (16) und einen elektrischen Generator (18);
und wobei das Speichern der erzeugten erneuerbaren Energie dadurch erreichbar ist, dass ein Teil des CO₂ veranlasst wird, nacheinander über das erste Bohrloch (3), einen Teil der Rohrleitungsstruktur (19, 20, 21, 22, 24 und 23) und das zweite Bohrloch (2) von dem ersten Reservoir (5) zu und in das zweite Reservoir (4) zu strömen, wobei das Veranlassen des Strömens eines Teils des CO₂ durch den Kompressor (14) realisiert wird, der durch die erzeugte erneuerbare Energie angetrieben wird;
und wobei die Rückgewinnung der erzeugten erneuerbaren Energie dadurch erreichbar ist, dass man einen Teil des CO₂ nacheinander über das zweite Bohrloch (2), einen Teil der Rohrleitungsstruktur (23, 24, 25, 26, 27, 28, 29, 30, 20 und 19) und das erste Bohrloch (3) von dem zweiten Reservoir (4) zu und in das erste Reservoir (5) strömen lässt, wobei der Teil des CO₂ während des Strömenlassens eines Teils des CO₂ expandiert und über die Turbine (16) den elektrischen Generator (18) antreibt.

## Revendications

1. Procédé pour stocker et récupérer une énergie renouvelable, qui a été générée en mer, dans lequel il est fait usage de :
• un premier réservoir (5) connecté à un premier puits (3), et un deuxième réservoir (4) connecté à un deuxième puits (2), dans lequel chacun parmi le premier réservoir (5) et le deuxième réservoir (4) est un réservoir souterrain en mer à partir duquel du pétrole ou du gaz naturel a été antérieurement extrait et qui a été rendu prêt pour l'injection et le stockage de CO₂, et dans lequel ledit CO₂ est défini comme étant un mélange de dioxyde de carbone pur et d'autres substances, dans lequel la proportion du dioxyde de carbone est d'au moins 50 %, et dans lequel chacun parmi le premier puits (3) et le deuxième puits (2) est une ouverture, qui a été forée antérieurement dans un but d'extraction de pétrole ou de gaz naturel, et qui a été rendue prête pour l'injection et le stockage de CO₂ dans le premier réservoir (5) et le deuxième réservoir (4), respectivement, et dans lequel le CO₂ est stocké dans le premier réservoir (5) et dans le deuxième réservoir (4), et dans lequel le CO₂ dans le premier réservoir (5) est maintenu sous une pression inférieure à celle dans le deuxième réservoir (4) ;
• une structure de tuyauterie (19, 20, 21, 22, 23, 24, 25, 26, 27, 28, 29, 30), qui est configurée pour déplacer une portion du CO₂ depuis le premier réservoir (5), successivement via le premier puits (3), la structure de tuyauterie et la deuxième puits (2), vers et dans le deuxième réservoir (4), et réciproquement ; et
• un compresseur entraîné électriquement (14), une turbine (16) et un générateur électrique (18) ;
et dans lequel ledit stockage de ladite énergie renouvelable générée est obtenu par l'écoulement forcé d'une portion du CO₂ successivement via le premier puits (3), une partie de la structure de tuyauterie (19, 20, 21, 22, 24 et 23) et le deuxième puits (2), depuis le premier réservoir (5) vers et dans le deuxième réservoir (4), dans lequel l'écoulement forcé d'une portion du CO₂ est réalisé par le compresseur (14) qui est entraîné par ladite énergie renouvelable générée ;
et dans lequel ladite récupération de l'énergie renouvelable générée est obtenue par l'écoulement permis d'une portion du CO₂, successivement via le deuxième puits (2), une partie de la structure de tuyauterie (23, 24, 25, 26, 27, 28, 29, 30, 20 et 19) et le premier puits (3), depuis le deuxième réservoir (4) vers et dans le premier réservoir (5), dans lequel ladite portion du CO₂, durant ledit écoulement permis d'une portion du CO₂, se détend et entraîne, via la turbine (16), le générateur électrique (18).

2. Système pour stocker et récupérer une énergie renouvelable, qui a été générée en mer, lequel système comprend :
• un premier réservoir (5) connecté à un premier puits (3), et un deuxième réservoir (4) connecté à un deuxième puits (2), dans lequel chacun parmi le premier réservoir (5) et le deuxième réservoir (4) est un réservoir souterrain en mer à partir duquel du pétrole ou du gaz naturel a été antérieurement extrait et qui a été rendu prêt pour l'injection et le stockage de CO₂, et dans lequel ledit CO₂ est défini comme étant un mélange de dioxyde de carbone pur et d'autres substances, dans lequel la proportion du dioxyde de carbone est d'au moins 50 %, et dans lequel chacun parmi le premier puits (3) et le deuxième puits (2) est une ouverture, qui a été forée antérieurement dans un but d'extraction de pétrole ou de gaz naturel, et qui a été rendue prête pour l'injection et le stockage de CO₂ dans le premier réservoir (5) et le deuxième réservoir (4), respectivement, et dans lequel le CO₂ est stocké dans le premier réservoir (5) et dans le deuxième réservoir (4), et dans lequel le CO₂ dans le premier réservoir (5) est maintenu sous une pression inférieure à celle dans le deuxième réservoir (4) ;
• une structure de tuyauterie (19, 20, 21, 22, 23, 24, 25, 26, 27, 28, 29, 30), qui est configurée pour déplacer une portion du CO₂ depuis le premier réservoir (5), successivement via le premier puits (3), la structure de tuyauterie et la deuxième puits (2), vers et dans le deuxième réservoir (4), et réciproquement ; et
• un compresseur entraîné électriquement (14), une turbine (16) et un générateur électrique (18) ;
et dans lequel ledit stockage de ladite énergie renouvelable générée est obtenu par l'écoulement forcé d'une portion du CO₂ successivement via le premier puits (3), une partie de la structure de tuyauterie (19, 20, 21, 22, 24 et 23) et le deuxième puits (2), depuis le premier réservoir (5) vers et dans le deuxième réservoir (4), dans lequel l'écoulement forcé d'une portion du CO₂ est réalisé par le compresseur (14) qui est entraîné par ladite énergie renouvelable générée ;
et dans lequel ladite récupération de l'énergie renouvelable générée est obtenue par l'écoulement permis d'une portion du CO₂, successivement via le deuxième puits (2), une partie de la structure de tuyauterie (23, 24, 25, 26, 27, 28, 29, 30, 20 et 19) et le premier puits (3), depuis le deuxième réservoir (4) vers et dans le premier réservoir (5), dans lequel ladite portion du CO₂, durant ledit écoulement permis d'une portion du CO₂, se détend et entraîne, via la turbine (16), le générateur électrique (18).
